# FASCICULE DE BREVET EUROPEEN

(11) **EP 3 449 198 B1**
(45) Date de publication et mention de la délivrance du brevet: **25.03.2020**
(21) Numéro de dépôt: 17722113.2
(22) Date de dépôt: 19.04.2017
(51) Int. Cl.: F28F 9/02, F02B 29/04

(54) **COLLECTEUR ET DISPOSITIF DE REFROIDISSEMENT ASSOCIE**
SAMMLER UND ZUGEHÖRIGE KÜHLVORRICHTUNG
COLLECTOR AND ASSOCIATED COOLING DEVICE

(30) Priorité: 27.04.2016 FR 1653755
(43) Date de publication de la demande: 06.03.2019
(73) Titulaire: Valeo Systemes Thermiques, 78320 Le Mesnil Saint Denis (FR)
(72) Inventeur: FERLAY, Benjamin, 85774 Unterfoehring (FR)
(74) Mandataire: Tran, Chi-Hai
(86) Numéro de dépôt international: PCT/FR2017/050927
(87) Numéro de publication internationale: WO 2017/187047

(56) Documents cités:
- EP-A1- 2 765 286
- FR-A1- 2 984 477
- FR-A1- 2 984 478

## Description

La présente invention se rapporte au domaine de l'alimentation en air des moteurs de véhicules automobiles, et concerne plus particulièrement les moteurs dits turbocompressés, dont l'air d'alimentation provient d'un compresseur ou d'un turbocompresseur. En particulier, la présente invention se rapporte à des collecteurs tels que définis dans le préambule de la revendication 1, et tels que divulgués en figure 1 du document FR 2 984 478 A1.

Qu'il provienne d'un seul système d'admission du moteur ou qu'il s'agisse d'un mélange d'air et de gaz d'échappement récupérés à la sortie du moteur et préalablement traités par un dispositif connu sous l'acronyme EGR ("Exhaust Gas Recirculation"), on désigne couramment par air de suralimentation le mélange gazeux admis au sein du moteur dans un tel cas. Afin d'augmenter la densité de cet air de suralimentation, il est connu de le refroidir en le faisant passer dans un échangeur de chaleur, également appelé refroidisseur. Ce refroidisseur peut être du type dans lequel l'échange de chaleur est réalisé par mise en contact de l'air de suralimentation avec un ensemble de tubes ou plaques dans lesquels circule un liquide de refroidissement : un tel refroidisseur est alors désigné sous l'acronyme WCAC pour "Water Charge Air Cooler". Le refroidisseur peut aussi être du type dans lequel l'échange de chaleur est réalisé par mise en contact de l'air de suralimentation avec un ensemble d'éléments dans lesquels circule un gaz de refroidissement : un tel refroidisseur est alors désigné sous l'acronyme ACAC pour "Air Charge Air Cooler". Dans le principe, l'air de suralimentation, issu de l'ensemble de compression (compresseur ou turbocompresseur), est admis dans le refroidisseur par une boîte d'entrée, puis, après avoir circulé et avoir été refroidi dans le refroidisseur, il est acheminé, par l'intermédiaire d'une boîte de sortie, vers l'ensemble de combustion du moteur.

Dans tous les cas, l'interface entre le refroidisseur et les boîtes d'entrée et de sortie de l'air de suralimentation est réalisé par l'intermédiaire, par exemple, de collecteurs eux-mêmes sertis ou soudés sur le refroidisseur et reliés aux boîtes d'entrée et de sortie. Lors de ces opérations de sertissage ou de soudage, toutefois, il peut se produire une déformation mécanique de l'ensemble des plaques ou tubes formant le refroidisseur, ainsi que des boîtes d'entrée et/ou de sortie dans leur zone de raccordement à ces collecteurs et au refroidisseur.

Le but de la présente invention est de proposer un collecteur et un ensemble de refroidissement d'air de suralimentation d'un moteur turbocompressé dans lesquels les risques de déformation mécanique du refroidisseur et de ses boîtes d'acheminement d'air, qu'il s'agisse d'une boîte d'entrée ou d'une boîte de sortie d'air, lors de l'opération de son sertissage/soudage avec des collecteurs de boîte d'entrée ou de sortie d'air de suralimentation soient limités au maximum, voire supprimés.

Dans ce but, l'invention a pour objet un collecteur selon la revendication 1.

Avantageusement, le collecteur selon l'invention est composé d'un cadre dont la forme et les dimensions sont définies pour qu'il puisse être rapporté par sertissage ou par soudage sur une face d'accueil du refroidisseur. On pourra prévoir que chaque bretelle de renfort s'étend transversalement d'un côté à un côté opposé du cadre. Selon un mode de réalisation préféré de l'invention, le refroidisseur a une forme sensiblement parallélépipédique, et sa face d'accueil est sensiblement perpendiculaire à un plan selon lequel s'étendent les plaques dans lesquelles circule le fluide de refroidissement. Selon ce mode de réalisation préféré, le cadre du collecteur a alors une forme sensiblement rectangulaire, et chaque bretelle de renfort s'étend transversalement d'un grand côté à l'autre du rectangle formant ledit cadre, sensiblement perpendiculairement auxdits côtés.

Selon un mode de réalisation préféré de l'invention, les bretelles de renfort sont régulièrement réparties au sein du cadre sur lequel elles sont placées.

Selon différents modes de réalisation de l'invention, chaque bretelle de renfort est réalisée issue de matière avec le cadre, ou bien chaque bretelle de renfort est réalisée séparément du cadre et fixée ensuite sur ce dernier. Dans ce dernier cas, la fixation des bretelles de renfort peut notamment être réalisée, à titre d'exemples non exhaustifs, par sertissage, par encliquetage à déformation élastique ou par emmanchement à force.

L'invention s'étend également à un dispositif de refroidissement de l'air de suralimentation issu du dispositif de compression d'un moteur turbocompressé de véhicule automobile, comprenant un refroidisseur et un ensemble de boîtes d'acheminement d'air par lesquelles l'air de suralimentation issu du dispositif de compression est respectivement acheminé vers ledit refroidisseur puis dudit refroidisseur vers le dispositif de combustion du moteur, caractérisé en ce que l'interface entre ledit refroidisseur et l'une au moins desdites boîtes d'acheminement est réalisée par un collecteur tel qu'il vient d'être décrit.

On pourra prévoir que la boîte de cheminement d'air comporte une paroi de forme convexe qui s'étend en s'éloignant de la face d'accueil du collecteur sur le refroidisseur, les bretelles de renfort étant plus rapprochées les unes des autres dans la partie du collecteur située dans la zone de plus grand éloignement de la paroi.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'un refroidisseur accueillant un collecteur selon l'invention,
- la figure 2 est une vue en perspective d'un collecteur selon l'invention,
- la figure 3 est une vue schématique de la section d'une bretelle de renfort d'un collecteur selon l'invention,
- et la figure 4 est une vue générale, en perspective, d'une section partielle d'une boîte d'acheminement d'air reliée à un refroidisseur au moyen d'un collecteur selon l'invention.

Il faut tout d'abord noter que si les figures exposent l'invention de manière détaillée pour sa mise en œuvre, elles peuvent bien entendu servir à mieux définir l'invention le cas échéant.

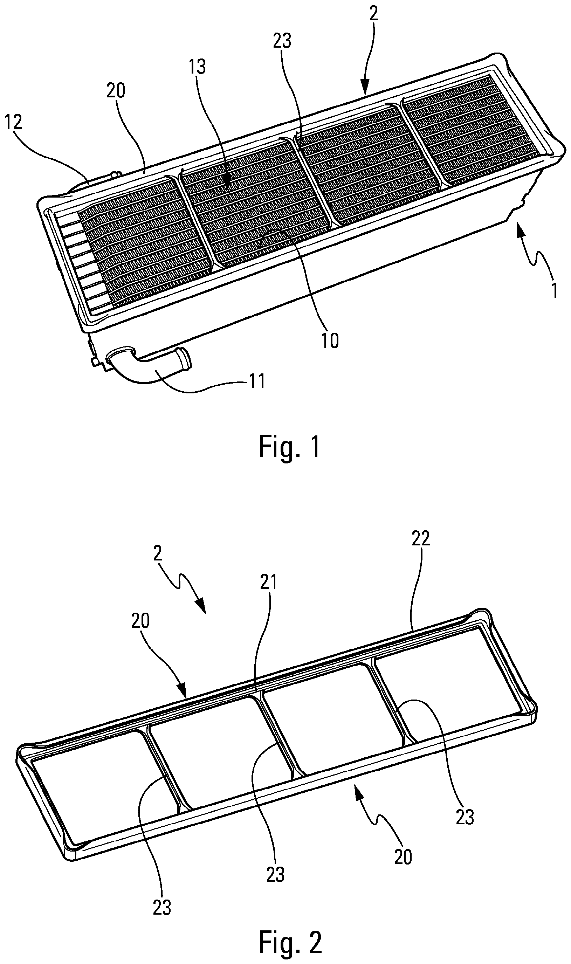

La figure 1 représente un ensemble refroidisseur d'air de suralimentation 1 sur lequel est rapporté un collecteur 2 selon l'invention. Selon le mode de réalisation illustré par cette figure, le refroidisseur 1 a sensiblement la forme d'un parallélépipède rectangle, dans lequel des plaques de refroidissement 10, dans lesquelles circule le fluide de refroidissement, s'étendent sensiblement selon un plan parallèle à l'une des faces de ce parallélépipède. Selon un mode de réalisation préféré, mais non exclusif, de l'invention, le fluide qui circule dans les plaques 10 du refroidisseur 1 est un liquide connu pour ses performances en termes d'échange thermique, et l'air de suralimentation à refroidir est acheminé entre les plaques de refroidissement 10 selon un trajet qui permet d'optimiser l'échange de chaleur avec ce liquide de refroidissement. Le fluide de refroidissement est ainsi avantageusement admis dans le refroidisseur par un conduit d'entrée 11, et il en ressort par un conduit de sortie 12.

Selon l'invention, et en référence également à la figure 2, le collecteur 2 se présente sous la forme d'un cadre sensiblement rectangulaire plan 20 dont les dimensions correspondent sensiblement à celles d'une face 13 du refroidisseur 1 sensiblement perpendiculaire au plan selon lequel s'étendent les plaques 10 de ce même refroidisseur. Pour plus de clarté dans ce qui suit, cette face 13 du refroidisseur 1 sera désignée comme face d'accueil 13 du collecteur 2 sur le refroidisseur 1. Plus précisément, selon le mode de réalisation préféré de l'invention illustré par les figures, les formes et dimensions du cadre 20 du collecteur 2 sont définies de telle manière qu'une première face du collecteur 2 puisse être accueillie sur la face d'accueil 13 du refroidisseur 1 pour y être sertie ou soudée, le collecteur 2 étant avantageusement réalisé, par exemple, par emboutissage d'un matériau métallique de faible épaisseur. Les côtés du cadre 20 constituant le collecteur 2 sont ainsi formés de telle manière que, en section selon un plan sensiblement perpendiculaire au plan défini par ledit cadre 20, ils présentent, en leur première face destinée à coopérer avec la face d'accueil 13 du refroidisseur 1, un ensemble de gorges, lèvres et rebords qui les rendent aptes à coopérer, par exemple par emboîtement, avec les bords de cette face d'accueil 13. Ces lèvres, gorges et rebords ne sont pas représentés sur les figures.

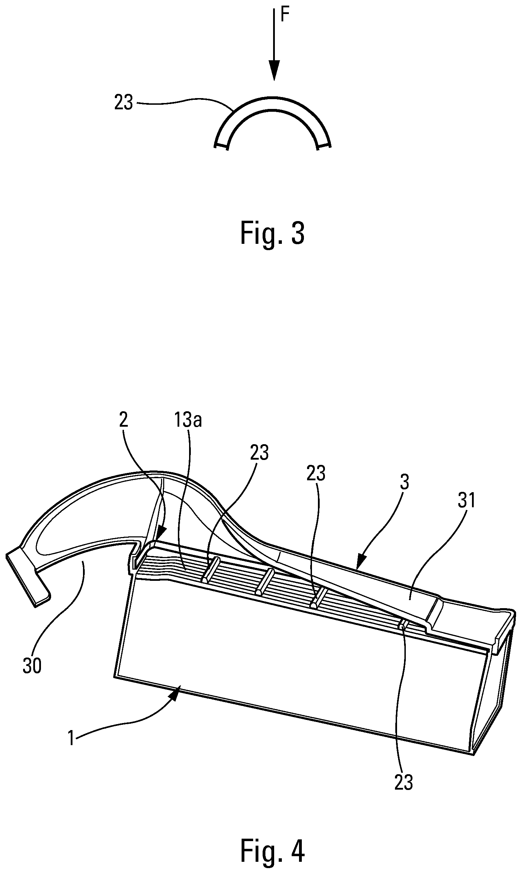

Selon une autre caractéristique de l'invention, ces mêmes côtés présentent également, en section selon un plan sensiblement perpendiculaire au plan défini par le cadre 20, sur leur deuxième face opposée à la première face destinée à coopérer avec la face d'accueil 13 du refroidisseur 1, un ensemble de formes qui les rendent aptes à coopérer avec les bords d'une boîte d'entrée ou d'une boîte de sortie d'air. Dans ce qui suit, boîte d'entrée d'air et boîte de sortie d'air, en amont et en aval du refroidisseur 1, seront indifféremment désignées par le terme de boîte d'acheminement d'air 3 (visible sur la figure 4). Le collecteur 2 selon l'invention comporte donc à la fois une première face apte à coopérer avec une face d'accueil 13 du refroidisseur 1 et une deuxième face apte à coopérer avec une boîte d'acheminement d'air 3, réalisant ainsi l'interface entre ces éléments. Seule la deuxième face du collecteur 2, configurée pour être apte à coopérer avec les bords d'une boîte d'acheminement d'air 3, est visible sur les figures 1 et 2. En référence à ces figures, les côtés du cadre 20 formant le collecteur 2 comportent, en leur deuxième face destinée à coopérer avec les bords d'une boîte d'acheminement d'air 3, une gorge 21 qui s'étend sur tout le périmètre du cadre 20 et qui est bordée, sur la totalité de ce même périmètre, par une lèvre 22 qui s'étend à l'opposé de la première face du cadre 20 destinée à être accueillie sur la face d'accueil 13 du refroidisseur 1. Aux coins du rectangle formé par le cadre 20, la lèvre 22 présente avantageusement une hauteur supérieure à sa hauteur le long des côtés du cadre 20, de manière à faciliter l'emboîtement du collecteur 2 autour des bords de la boîte d'acheminement d'air 3.

Selon l'invention, le collecteur 2 comporte un ensemble de bretelles de renfort 23. Chacune de ces bretelles de renfort s'étend transversalement entre deux côtés opposés du cadre sensiblement rectangulaire 20 du collecteur 2. Selon le mode de réalisation préféré de l'invention illustré par les figures, non exclusif, chacune des bretelles de renfort 23 s'étend depuis un grand côté du rectangle formé par le cadre 20 du collecteur 2 jusqu'au grand côté opposé de ce même rectangle.

Chaque bretelle de renfort 23 se trouve ainsi, une fois le collecteur 2 placé à l'interface du refroidisseur 1 et d'une boîte d'acheminement d'air, placée dans le flux d'air qui traverse le refroidisseur et cette boîte d'acheminement d'air. Afin de limiter autant que possible toute perte de charge et toute perturbation du flux d'air par la présence des bretelles de renfort 23, l'invention propose que ces dernières présentent, selon la direction et le sens dans lequel l'air circule, un profil particulier. La figure 3 illustre un le profil d'une bretelle de renfort 23, en section selon un plan sensiblement perpendiculaire à la direction selon laquelle elle s'étend. Selon l'invention, chaque bretelle de renfort 23 présente, en section selon un tel plan, une forme convexe dont le sommet de la courbure est orientée dans la même direction que celle du flux d'air qui la traverse, mais en sens opposé au sens de circulation de ce fluide, le sens de circulation de ce fluide étant représenté par la flèche F sur la Figure 3. Une telle orientation permet, notamment, d'éviter tout risque de mise en tourbillonnement de tout ou partie du flux d'air lorsque celui-ci entre en contact avec la bretelle de renfort 23. Selon différentes variantes de réalisation, le rayon de courbure de la forme convexe peut être plus ou moins important. Indépendamment ou en combinaison avec les différents rayons de courbure possibles, chaque bretelle de renfort 23 peut également présenter une épaisseur plus faible au sommet de sa forme convexe qu'à sa base, le but recherché étant toujours de réduire autant que possible la perte de charge induite dans le flux d'air par la présence de cette bretelle de renfort 23.

Ces bretelles de renfort 23 assurent la rigidité nécessaire à l'ensemble pour que le collecteur 2, le refroidisseur 1 et les plaques de refroidissement 10 qu'il comporte, et/ou la boite d'acheminement d'air 3, ne s'affaisse pas sous l'effet de la machine de sertissage que l'on vient plaquer contre cet ensemble pour fixer le refroidisseur et la boîte d'acheminent d'air.

Selon le mode de réalisation illustré par les figures, les bretelles de renfort sont au nombre de 3, et elles sont régulièrement réparties le long des grands côtés du rectangle formé par le cadre 20 du collecteur 2. Tout autre nombre et toute autre répartition des bretelles de renfort 23 sont toutefois envisageables sans que cela nuise à l'invention. Par ailleurs, selon différents modes de réalisation de l'invention, les bretelles de renfort 23 peuvent être issues de matière avec le cadre 20, ou être réalisées séparément, puis fixées sur le cadre 20 du collecteur 2, par exemple par sertissage, par encliquetage à déformation élastique ou par emmanchement à force.

La figure 4 montre une coupe partielle d'un exemple d'assemblage d'un refroidisseur 1 équipé d'un collecteur 2 tel qu'il vient d'être décrit avec une boîte d'acheminement d'air 3. Dans l'exemple illustré par cette figure, la boîte d'acheminement d'air 3 s'étend à partir d'une embouchure 30 par laquelle elle est rattachée au collecteur 2, et elle comporte une paroi de forme complexe 31 qui s'étend, à partir de l'embouchure 30, selon une direction sensiblement perpendiculaire à celle-ci. Plus précisément, la paroi 31, à l'une de ses extrémités par laquelle elle se rattache à l'un des côtés d'une première face d'accueil 13a du refroidisseur 1, se trouve placée au voisinage de cette première face d'accueil 13a, sur laquelle est rapporté le collecteur 2, et elle s'étend en s'éloignant de cette face d'accueil selon une forme convexe complexe, de telle manière qu'elle se trouve à un maximum d'éloignement sensiblement au regard de l'extrémité de la première face d'accueil 13a opposée à l'extrémité par laquelle la paroi 31 se rattache à cette dernière en étant au plus près de celle-ci. La paroi 31 de la boîte d'acheminement d'air 3 et la première face d'accueil 13a du refroidisseur 1, équipée du collecteur 2, définissent ainsi, ensemble, le volume intérieur de la boîte d'acheminement d'air 3. Dans une telle configuration, le sertissage de la boîte d'acheminement sur le collecteur 2 entraîne, du fait de la forme de cette boîte et, notamment, de la forme complexe de sa paroi 31, des différences de contrainte d'une extrémité à l'autre du collecteur 2 et, par l'intermédiaire de celui-ci, d'une extrémité à l'autre de la première face d'accueil 13a de ce collecteur 2 sur le refroidisseur 1. La présence des bretelles de renfort 23 permet alors ici un renforcement mécanique de l'ensemble formé par le collecteur 2 et le refroidisseur 1 sur lequel il est serti, réduisant au maximum les risques de déformation de ce refroidisseur et des plaques de refroidissement (uniquement visibles sur la figure 4 au niveau de leur extrémité débouchant sur la première face d'accueil 13a, notamment pour simplifier la lecture de la figure) qui constituent son circuit de refroidissement, ainsi que de la boîte d'acheminement d'air, dont la paroi 31 ne se trouve pas à distance constante du collecteur 2. Il est ici notable que le nombre de bretelles de renfort 23 illustrées est différent de celui dans la représentation de la figure 2, notamment pour illustrer une possibilité offerte par le collecteur selon l'invention. Il est possible d'ajuster le nombre des bretelles de renfort 23 disposées en travers du collecteur 2 et donc en travers du passage d'air dans le plan de jonction entre le refroidisseur 1 et la boîte d'acheminement d'air 3. On peut dès lors cibler des zones de fragilité au moment de l'opération de sertissage, notamment dû à la forme complexe de la boîte d'acheminement d'air et associer à ces zones de fragilité un plus grand nombre de bretelles de renfort, en les rapprochant les unes des autres. Il peut notamment être imaginé un collecteur 2 standard, avec un nombre de bretelles de renfort standard, régulièrement réparties sur le collecteur, et des bretelles additionnelles qui peuvent être rapportées et fixées sur le collecteur en fonction de son utilisation avec tel ou tel refroidisseur et/ou telle ou telle boîte d'acheminement d'air 3. Notamment, lorsque la boîte de cheminement d'air 3 comporte une paroi 31 de forme convexe qui s'étend en s'éloignant de la face d'accueil 13 du collecteur 2 sur le refroidisseur 1, une bretelle de renfort 23 additionnelle peut être agencée sur le collecteur de sorte que les bretelles soient plus rapprochées les unes des autres dans la partie du collecteur 2 située dans la zone où la paroi 31 est la plus éloignée du collecteur.

On comprend que, dans un tel assemblage, le refroidisseur 1 peut comporter également une deuxième face d'accueil, non visible sur la figure 4, mais située à l'opposé de la première face d'accueil 13a sur le refroidisseur 1, et apte à accueillir un deuxième collecteur destiné à assurer l'interface entre le refroidisseur 1 et une deuxième boîte d'acheminement d'air.

L'invention atteint donc son but, en proposant un collecteur 2 qui réalise l'interface entre un refroidisseur 1 d'un moteur turbocompressé et une boîte d'acheminement d'air (boîte d'entrée d'air ou boîte de sortie d'air) 3 liée à ce refroidisseur, de telle manière que tout risque de déformation de la boîte d'acheminement et/ou du refroidisseur soit réduit au maximum lors de l'opération de sertissage ou de soudage de ce collecteur 2 sur le refroidisseur et sur la boîte d'acheminement d'air.

Il est toutefois à noter que l'invention ne saurait se réduire aux moyens et configurations décrits et illustrés, mais qu'elle s'applique également à tous moyens ou configurations équivalents et à toute combinaison de tels moyens. En particulier, si, dans l'exemple décrit par le présent document, le refroidisseur 1 a sensiblement la forme d'un parallélépipède rectangle, toute autre forme peut être donnée à cet élément sans que cela nuise à l'invention. Il s'ensuit que la face d'accueil 13 du refroidisseur 1 à laquelle est rattaché le collecteur peut alors avoir une autre forme que celle d'un rectangle, le collecteur 2 n'ayant alors comme seule contrainte, selon l'invention, que celle d'avoir une forme et des dimensions similaires à celles de la face d'accueil 13.

## Revendications

1. Collecteur (2) configuré pour assurer l'interface entre un refroidisseur (1) d'un moteur turbocompressé de véhicule automobile et une boîte (3) d'acheminement d'air de suralimentation de ce moteur placée à l'entrée ou à la sortie de ce refroidisseur (1), ledit collecteur (2) comportant au moins une bretelle de renfort (23) placée dans le flux d'air circulant entre le refroidisseur (1) et la boîte d'acheminement d'air (3), **caractérisé en ce que**, en section selon un plan sensiblement perpendiculaire à la direction selon laquelle elle s'étend, au moins une bretelle de renfort (23) présente un profil convexe dont le sommet de la courbure s'étend dans la même direction que celle du flux d'air dans lequel le collecteur (2) est placé, en sens opposé au sens (F) dans lequel ce flux d'air circule entre le refroidisseur (1) et la boîte d'acheminement d'air (3).

2. Collecteur (2) selon la revendication 1, **caractérisé en ce qu'**il est composé d'un cadre (20) dont la forme et les dimensions sont définies pour qu'il puisse être rapporté par sertissage ou par soudage sur une face d'accueil (13) du refroidisseur (1).

3. Collecteur (2) selon la revendication 2, **caractérisé en ce que** chaque bretelle de renfort (23) s'étend transversalement d'un côté à un côté opposé du cadre (20).

4. Collecteur (2) selon l'une des revendications 2 ou 3, **caractérisé en ce que** le cadre (20) est de forme sensiblement rectangulaire, chaque bretelle de renfort s'étendant transversalement d'un grand côté à l'autre du rectangle formant ledit cadre (20), sensiblement perpendiculairement auxdits côtés.

5. Collecteur (2) selon l'une des revendications précédentes, qui comporte plusieurs bretelles de renfort (23), **caractérisé en ce que** celles-ci sont régulièrement réparties au sein du cadre (20) sur lequel elles sont placées.

6. Collecteur (2) selon l'une des revendications précédentes, **caractérisé en ce que** chaque bretelle de renfort (23) est réalisée issue de matière avec le cadre (20).

7. Collecteur (2) selon l'une des revendications 1 à 5, **caractérisé en ce que** chaque bretelle de renfort (23) est réalisée séparément du cadre (20) et fixée ensuite sur ce dernier.

8. Dispositif de refroidissement de l'air de suralimentation issu du dispositif de compression d'un moteur turbocompressé de véhicule automobile, comprenant un refroidisseur (1) et un ensemble de boîtes d'acheminement d'air (3), **caractérisé en ce que** l'interface entre ledit refroidisseur (1) et l'une au moins desdites boîtes d'acheminement (3) est réalisée par un collecteur (2) selon l'une des revendications précédentes.

9. Dispositif selon la revendication 8, **caractérisé en ce que** la boîte de cheminement d'air (3) comporte une paroi (31) de forme convexe qui s'étend en s'éloignant de la face d'accueil (13) du collecteur (2) sur le refroidisseur (1), les bretelles de renfort (23) étant plus rapprochées les unes des autres dans la partie du collecteur (2) située dans la zone de plus grand éloignement de la paroi (31).

## Patentansprüche

1. Rohrboden (2), welcher dafür ausgelegt ist, die Schnittstelle zwischen einem Kühler (1) eines turboaufgeladenen Motors eines Kraftfahrzeugs und einem Kasten (3) zur Führung von Ladeluft dieses Motors, der am Eingang oder am Ausgang dieses Kühlers (1) angeordnet ist, sicherzustellen, wobei der Rohrboden (2) wenigstens einen Verstärkungsträger (23) aufweist, der in dem zwischen dem Kühler (1) und dem Luftführungskasten (3) zirkulierenden Luftstrom angeordnet ist, **dadurch gekennzeichnet, dass** im Querschnitt entlang einer Ebene, die im Wesentlichen senkrecht zu der Richtung ist, in welcher er sich erstreckt, wenigstens ein Verstärkungsträger (23) ein konvexes Profil aufweist, dessen Scheitel der Krümmung sich in der Richtung erstreckt, welche dieselbe wie diejenige des Luftstroms ist, in welchem der Rohrboden (2) angeordnet ist, in entgegengesetzter Richtung zu der Richtung (F), in welcher dieser Luftstrom zwischen dem Kühler (1) und dem Luftführungskasten (3) zirkuliert.

2. Rohrboden (2) nach Anspruch 1, **dadurch gekennzeichnet, dass** er aus einem Rahmen (20) besteht, dessen Form und dessen Abmessungen so definiert sind, dass er durch Crimpen oder durch Schweißen an eine Aufnahmefläche (13) des Kühlers (1) angesetzt werden kann.

3. Rohrboden (2) nach Anspruch 2, **dadurch gekennzeichnet, dass** sich jeder Verstärkungsträger (23) quer von einer Seite zu einer gegenüberliegenden Seite des Rahmens (20) erstreckt.

4. Rohrboden (2) nach einem der Ansprüche 2 oder 3, **dadurch gekennzeichnet, dass** der Rahmen (20) eine im Wesentlichen rechteckige Form hat, wobei sich jeder Verstärkungsträger quer von einer langen Seite des den Rahmen (20) bildenden Rechtecks zur anderen erstreckt, im Wesentlichen senkrecht zu diesen Seiten.

5. Rohrboden (2) nach einem der vorhergehenden Ansprüche, welcher mehrere Verstärkungsträger (23) aufweist, **dadurch gekennzeichnet, dass** diese innerhalb des Rahmens (20), an welchem sie angeordnet sind, gleichmäßig verteilt sind.

6. Rohrboden (2) nach einem der vorhergehenden Ansprüche, **dadurch gekennzeichnet, dass** jeder Verstärkungsträger (23) mit dem Rahmen (20) einstückig ausgebildet ist.

7. Rohrboden (2) nach einem der Ansprüche 1 bis 5, **dadurch gekennzeichnet, dass** jeder Verstärkungsträger (23) getrennt von dem Rahmen (20) hergestellt und anschließend an diesem Letzteren befestigt wird.

8. Vorrichtung zur Kühlung der von der Kompressionsvorrichtung eines turboaufgeladenen Motors eines Kraftfahrzeugs kommenden Ladeluft, welche einen Kühler (1) und eine Anordnung von Luftführungskästen (3) umfasst, **dadurch gekennzeichnet, dass** die Schnittstelle zwischen dem Kühler (1) und wenigstens einem der Führungskästen (3) durch einen Rohrboden (2) nach einem der vorhergehenden Ansprüche realisiert ist.

9. Vorrichtung nach Anspruch 8, **dadurch gekennzeichnet, dass** der Luftführungskasten (3) eine Wand (31) von konvexer Form aufweist, welche sich von der Aufnahmefläche (13) für den Rohrboden (2) am Kühler (1) weg erstreckt, wobei die Verstärkungsträger (23) in dem Teil des Rohrbodens (2), der sich im Bereich der größten Entfernung von der Wand (31) befindet, stärker aneinander angenähert sind.

## Claims

1. Manifold (2) configured to ensure the interface between an air cooler (1) of a turbocharged motor vehicle engine and a box (3) for routing supercharging air from this engine placed at the inlet or at the outlet of this air cooler (1), said manifold (2) comprising at least one reinforcing strap (23) placed in the flow of air circulating between the air cooler (1) and the air routing box (3), **characterized in that**, in section along a plane substantially at right angles to the direction in which it extends, at least one reinforcing strap (23) has a convex profile of which the apex of the curvature extends in the same direction as that of the flow of air in which the manifold (2) is placed, in the opposite direction to the direction (F) in which this flow of air circulates between the air cooler (1) and the air routing box (3).

2. Manifold (2) according to Claim 1, **characterized in that** it is composed of a frame (20) whose form and dimensions are defined for it to be able to be added by crimping or by welding onto an accommodating face (13) of the air cooler (1).

3. Manifold (2) according to Claim 2, **characterized in that** each reinforcing strap (23) extends transversely from one side to an opposite side of the frame (20).

4. Manifold (2) according to either of Claims 2 and 3, **characterized in that** the frame (20) is of substantially rectangular form, each reinforcing strap extending transversely from one major side to the other of the rectangle forming said frame (20), substantially at right angles to said sides.

5. Manifold (2) according to one of the preceding claims, which comprises several reinforcing straps (23), **characterized in that** the latter are evenly distributed within the frame (20) on which they are placed.

6. Manifold (2) according to one of the preceding claims, **characterized in that** each reinforcing strap (23) is produced of a material piece with the frame (20).

7. Manifold (2) according to one of Claims 1 to 5, **characterized in that** each reinforcing strap (23) is produced separately from the frame (20) and then fixed thereon.

8. Device for cooling the supercharging air from the compression device of a turbocharged motor vehicle engine, comprising an air cooler (1) and a set of air routing boxes (3), **characterized in that** the interface between said air cooler (1) and at least one of said routing boxes (3) is produced by a manifold (2) according to one of the preceding claims.

9. Device according to Claim 8, **characterized in that** the air routing box (3) comprises a wall (31) of convex form which extends away from the accommodating face (13) of the manifold (2) on the air cooler (1), the reinforcing straps (23) being closer to one another in the part of the manifold (2) situated in the zone farthest away from the wall (31).
